# EUROPÄISCHE PATENTSCHRIFT

(11) **EP 0 299 168 B1**
(45) Veröffentlichungstag und Bekanntmachung des Hinweises auf die Patenterteilung: **12.07.1995**
(21) Anmeldenummer: 88107997.4
(22) Anmeldetag: 19.05.1988
(51) Int. Cl.: B29C 51/42

(54) **Verfahren und Vorrichtung zur Herstellung von Formteilen oder Gegenständen**
Method and apparatus for the manufacture of moulded parts or other articles
Procédé et dispositif de fabrication de pièces ou d'autres articles montés

(30) Priorität: 11.07.1987 DE 3723021
(43) Veröffentlichungstag der Anmeldung: 18.01.1989
(73) Patentinhaber: ALKOR GMBH KUNSTSTOFFE, D-81451 München (DE)
(72) Erfinder: Landler, Josef, D-8190 Wolfratshausen (DE)

(56) Entgegenhaltungen:
- EP-A- 0 121 929
- DE-A- 1 963 573
- DE-B- 1 132 320
- DE-B- 1 220 998
- DE-C- 1 151 367
- FR-A- 2 109 357
- GB-A- 2 167 014
- US-A- 3 196 488

## Beschreibung

Die vorliegende Erfindung betrifft ein Verfahren zur Herstellung von Gegenständen aus thermoverformbaren Kunststoffbahnen, wobei die Kunststoffbahnen aufgeheizt, durch Spann- oder Abdichtungsrahmen gespannt und unter Mitverwendung eines Druckunterschiedes mit ihrer Vorderseite in eine Form eingebracht werden, die eine luftdurchlässige Formoberflächenschicht besitzt und in der die endgültige Formgestaltung und die Narbgebung durch Thermoverformung durchgeführt wird. Gemäß der vorliegenden Erfindung wird das Verfahren unter Einhaltung bestimmter Verfahrensbedingungen verbessert.

Aus der DE-A-1 963 573 ist bereits eine Vorrichtung zum Tiefziehen von thermoplastisch verformbaren Folien bekannt, die aus einer Backenpresse mit einem Heiz- oder Plastifizierbacken und einem Formbacken besteht. Der Heizbacken enthält eine poröse Sintermetallplatte und eine satt angefügte Heizplatte mit Heizelementen. Ebenso besteht die Formplatte aus einer gleichartig porösen Sintermetallplatte mit Kühlplatte. Es sind somit die Heizbacken beheizt und dienen zusammen mit der Formbacke zum Umpressen. Die Wärme wird über die Heizbacke zugeführt, ein Vorheizen der Kunststoffolie außerhalb der Backenpresse findet nicht statt. Ebenso keine bestimmte Temperaturführung, Vorformung und dergleichen.

Das in der DE-A-1 963 573 beschriebene Verfahren und die Vorrichtung sind somit für größere, mit Feinstrukturierung zu versehene Gegenstände oder mit Hinterschnitten versehene Formteile nicht vorteilhaft bzw. nicht geeignet und lassen auch keine bestimmten Temperaturführungen zu.

Ziel und Aufgabe der vorliegenden Erfindung war es, das Verfahren und die Vorrichtung gemäß DE-A-1 963 573 und auch das bekannte Negativtiefziehverfahren zu verbessern. Durch Änderung der Verfahrensbedingungen und der Vorrichtung sollte erzielt werden, daß die Dehnungsfähigkeit und die Bruchdehnung der Kunststoffbahnen bei dem Verformungsvorgang gehalten bzw. verbessert werden.

Es sollte weiterhin erreicht werden, auch komplizierte oder größere Gegenstände innerhalb des Verfahrens bzw. mit der Vorrichtung herzustellen und diese mit Oberflächenstrukturierungen zu versehen.

Erfindungsgemäß wurde festgestellt, daß diesen Zielen und Aufgaben ein Verfahren zur Herstellung von Gegenständen aus thermoverformbaren Kunststoffbahnen gerecht wird, wobei die Kunststoffbahnen aufgeheizt, durch Spann- oder Abdichtungsrahmen gespannt und unter Mitverwendung eines Druckunterschiedes mit ihrer Vorderseite in eine Form eingebracht werden, die eine luftdurchlässige Formoberflächenschicht besitzt und in der die endgültige Formgestaltung und die Narbgebung durch Thermoverformung durchgeführt wird. Gemäß der Erfindung wird unter Mitverwendung eines Druckunterschiedes und/oder durch einen Stempel die Kunststoffbahn zur Negativtiefziehform hin gewölbt und vorgeformt, zwischen der Kunststoffbahn und der kälteren Negativtiefziehform eine Temperaturdifferenz von mehr als 50 °C eingehalten, vor der Thermoverformung auf der Rückseite der Kunststoffbahn eine Oberflächenschicht auf eine Temperatur eingestellt, die um mehr als 5 °C niedriger ist als die Temperatur auf der der Negativtiefziehform zugewandten Kunststoffbahnfläche, während auf der Negativtiefziehform zugewandten Seite der Kunststoffbahn die Oberflächenschicht auf eine (gegenüber der anderen Oberflächenschicht) höhere Temperatur innerhalb des thermoplastischen Bereiches bis 260 °C aufgeheizt und die Narbgebung mit einer, eine poröse luftdurchlässige Formoberflächenschicht aufweisende Negativtiefziehform durchgeführt wird.

Durch diese Verfahrensmaßnahme gelingt es, das Negativtiefziehverfahren zu verbessern. Insbesondere wird gemäß dem erfindungsgemäßen Verfahren die Dehnfähigkeit und Bruchdehnung der Folie bei dem Verformungsvorgang gehalten bzw. verbessert. Dadurch, daß gemäß dem erfindungsgemäßen Verfahren die Oberflächenschicht oder Oberfläche der Kunststoffbahn (Kunststoffolie, -bahn oder -platte) auf eine etwas höhere Temperatur als die der Unterseite eingestellt wird und die Verformung im thermoplastischen Bereich oder im wesentlichen im thermoplastischen Bereich erfolgt, wird das Erinnerungsvermögen der verformten Folie weitgehend ausgeschaltet, so daß ein verformter Gegenstand aus der Kunststoffolie, -bahn oder -platte erhalten wird, der fast völlig oder zumindestens weitgehend ohne innere Spannungen ist. Dadurch wird auch ein erheblicher Vorteil gegenüber dem Positivverfahren erzielt, bei dem in der Regel im thermoelastischen Bereich oder in Ausnahmefällen nur in bestimmten Tiefenbereichen der Foliendicke von der Rückseite her im thermoplastischen Bereich Verformungen durchgeführt werden können, ohne daß die Oberflächenstrukturierung der vorher geprägten Folie geschädigt wird.

Gemäß einer bevorzugten Ausführungsform des erfindungsgemäßen Verfahrens erfolgt vor dem Anlegen eines Vakuums oder Unterdruckes an die Negativtiefziehform und/oder an die Kammer, in der die Negativtiefziehform angeordnet ist, eine abdichtende Schließung der Formöffnung der Negativtiefziehform und/oder einer um die Negativtiefziehform angeordneten Kammer, vorzugsweise eine luftabschließende Abdichtung der Formöffnung mit dem Stempel oder einer Stempelteiloberfläche und/oder einem Teil der Druckkammer, in der der Stempel angeordnet ist. Nach der abdichtenden Schließung, vorzugsweise nach der luftabdichtenden Schließung, wird ein Unterdruck oder Vakuum an die Negativtiefziehform angelegt. Bevorzugt wird daher die Negativtiefziehform in Kombination mit einer Druckkammer angewendet.

Nach einer bevorzugten Ausführungsform wird vor der Thermoverformung auf der Rückseite der Kunststoffbahn eine Oberflächenschicht auf eine Temperatur durch gesteuertes Heizen oder gesteuertes Abkühlen eingestellt, die um mehr als 10 °C niedriger ist als die Temperatur auf der der Negativtiefziehform zugewandten Kunststoffolienbahn. Vor dem Anlegen eines Unterdruckes an die Negativtiefziehform erfolgt eine abdichtende Schließung und danach wird ein Unterdruck angelegt. Kurz vor der Thermoverformung nähert sich dabei der Stempel (5), vorzugsweise Positivstempel, der erhitzten, eingespannte Kunststoffbahn, über die Stempeloberfläche wird die Kunststoffbahn angelegt oder angesaugt, die die Stempeloberflächenform ganz oder in Teilbereichen annimmt, danach erfolgt an der Negativtiefziehform eine abdichtende Schließung der Formöffnung. Während oder kurzfristig nach der abdichtenden Schließung wird das vom Stempel her angelegte Vakuum aufgehoben und ein Druck auf die Kunststoffbahnrückseite über den Stempel oder die Stempeloberfläche von
4 x 10² Pa bis 4 x 10⁵ Pa, vorzugsweise
1 x 10³ Pa bis 1,5 x 10⁵ Pa,
und/oder von der Negativtiefziehform (2) her ein Unterdruck unter Ansaugung der Kunststoffbahn an die Negativtiefziehform ausgeübt.

Durch die Anlegung eines Überdruckes an die Folienrückseite über den Stempel oder über die Stempeloberfläche und/oder durch Anlegung eines Unterdruckes oder Vakuums von der Negativtiefziehform, erfolgt ein "Abblasen" von dem Stempel oder ein "Ansaugen" von der Negativtiefziehform, so daß sich die Kunststoffolie, -bahn oder -platte an die Konturen und Mikrostrukturen der Negativtiefziehform anlegt. Beide Maßnahmen unterstützen sich untereinander und können gleichzeitig oder nachfolgend ablaufen.

Die Kunststoffbahn wird bevorzugt durch einen Spann- oder Abdichtungsrahmen oder Haltevorrichtung gespannt oder gehalten, der bzw. die nicht unmittelbar mit der Negativtiefziehform verbunden ist, vorzugsweise in der Druckkammer, einem Tisch oder einer anderen nicht unmittelbar an der Negativtiefziehform befestigten Haltevorrichtung angeordnet ist.

Nach einer bevorzugten Ausführungsform des erfindungsgemäßen Verfahrens wird die Kunststoffbahn durch einen Spann- oder Abdichtungsrahmen oder eine Haltevorrichtung gespannt oder gehalten und aufgeheizt (auf eine Temperatur mindestens innerhalb des thermoelastischen Bereiches und/oder thermoplastischen Bereiches). Dabei wird vorzugsweise die Kunststoffbahn zusätzlich mittels Stützgas oder Stützluft und/oder einem in Gegenrichtung angelegten Vakuum gehalten und/oder kurz vor der Thermoverformung durch Gas oder Luft und/oder einen Stempel, vorzugsweise Positivstempel, gehalten oder gestützt, wobei die Kunststoffolie in Richtung der Negativtiefziehform oder der Öffnung der Negativtiefziehform durchgebogen oder verformt wird. Danach wird die Negativtiefziehform in Richtung der Durchbiegung oder Verformung und/oder des Stempels bewegt, vorzugsweise in axialer Richtung bewegt und gleichzeitig oder nachfolgend ein Unterdruck oder Vakuum über dem Stempel und/oder der Druckkammer angelegt. Vor dem Anlegen eines Vakuums oder Unterdruckes an die Negativtiefziehform erfolgt eine abdichtende Schließung der Formöffnung der Negativtiefziehform, vorzugsweise eine luftabschließende Abdichtung der Formöffnung mit dem Stempel oder einer Stempelteiloberfläche und/oder einem Teil der Druckkammer. Nach der abdichtenden Schließung, vorzugsweise nach der luftabdichtenden Schließung, wird ein Unterdruck oder Vakuum an die Negativtiefziehform angelegt, wobei die zwischengeformte Kunststoffolie, -bahn oder -platte zur Endformung von dem Stempel weg auf die Negativtiefziehform übertragen wird und nimmt dort die Endform an. Danach wird die durch den Stempel verschlossene Negativtiefziehform geöffnet, indem die Negativtiefziehform und/oder der Stempel zurückbewegt, vorzugsweise in axialer Richtung zurückgefahren, wird.

Die endgültige Formgestaltung (Endformung) und die Narbgebung und/oder Oberflächendekoration der Kunststoffolie, -bahn oder -platte, vorzugsweise mindestens einer Oberflächenschicht derselben, erfolgt in oder oberhalb des Schmelzpunkt(es), Schmelzbereich(es), vorzugsweise jedoch im thermoplastischen Bereich, während die Temperatur des Negativtiefziehwerkzeuges auf unter 100 °C, vorzugsweise unter 85 °C, eingestellt oder gehalten wird. Als Negativtiefziehwerkzeug wird eine Negativtiefziehform verwendet, die eine poröse, luftdurchlässige, vorzugsweise mikroporöse luftdurchlässige, Formoberflächenschicht besitzt, die eine metall-, metallegierungs-, mikrometallpartikelhaltige, keramik-metall- und/oder keramik-mikropartikelhaltige und/oder festigkeitserhöhende Zusatzstoffe enthaltende Schicht oder Oberfläche mit einer durchschnittlichen Partikeldicke unter 150 »m, vorzugsweise unter 60 »m, aufweist und/oder die mindestens eine Formoberflächenschicht besitzt, die aus Kunststoff oder-harz, vorzugsweise Epoxidharz und/oder Silikonkautschuk, besteht oder diesen bzw. dieses enthält.

Durch die erfindungsgemäße Verfahrensdurchführung ist es möglich, die Temperaturführung des Negativtiefziehwerkzeuges in den Bereich oder in die Nähe des Bereiches der Entformungstemperatur der zu entformenden verformten Kunststoffolie, der zu entformenden Gegenstände oder Teile aus Kunststoffolienbahnen oder Kunststoffplatten zu legen. Dadurch ist es auch möglich, das Negativtiefziehwerkzeug auf einer nahezu konstante Temperatur zu halten, wodurch keine wesentlichen Temperaturspannungen im Werkzeug auftreten. Durch die relativ niedrige Temperaturführung des Negativtiefziehwerkzeuges werden aus der Kunststoffolie, -bahn oder -platte eventuell austretende bzw. imitierende Bestandteile nicht oder kaum in den Poren der Negativtiefziehform zersetzt, so daß die Gefahr einer Porenverstopfung der Negativtiefziehform im Rahmen des erfindungsgemäßen Verfahrens weitgehend reduziert wird. Dadurch wird auch die Taktzeit bzw. die Produktionszeit (für einen Teil) verkürzt, da Aufheiz- und Abkühlvorgänge beim Negativtiefziehwerkzeug weitgehend eingespart werden können.

Nach einer bevorzugten Ausführungsform ist bzw. wird der Stempel auf eine Temperatur eingestellt oder temperiert (gekühlt oder aufgeheizt), die zwischen dem oberen Drittel des thermoelastischen Temperaturbereiches der zu verformenden Kunststoffolie, -bahn oder -platte und dem thermoplastischen Bereich derselben liegt, vorzugsweise zwischen dem oberen Viertel des thermoelastischen Temperaturbereiches und der Kristallitschmelztemperatur oder dem Fließtemperaturbereich oder im Fließtemperaturbereich oder im Kristallitschmelzbereich der zu verformenden Kunststoffolie, -bahn oder -platte liegt, während die Temperatur der Negativtiefziehform auf unter 100 °C, vorzugsweise unter 85 °C, eingestellt wird.

Durch die erfindungsgemäße Temperaturführung des Stempels sowie durch die Einschaltung einer Zwischenverformung mittels de Stempels, der teilweise oder ganz den Konturen oder Formgestaltungen des Negativtiefziehwerkzeuges (in Positivform) entspricht, wird eine bessere oder günstigere Dickenverteilung der tiefgezogenen Kunststoffolie, -bahn oder -platte bzw. den daraus hergestellten Formteilen oder Gegenständen erzielt. Das erfindungsgemäße Verfahren und die erfindungsgemäße Vorrichtung ermöglichen eine Kombination der Vorteile des Positivtiefziehverfahrens wie auch des Negativtiefziehverfahrens. Durch die Kombination der genannten Verfahrensmerkmale und das zeitliche Ineinandergreifen der vorgänge des Positivformens und des Negativverformens wird eine bessere Dickenverteilung auch an den Übergangsstellen der hergestellten Gegenstände bzw. Formteile ermöglicht.

Nach einer anderen bevorzugten Ausführungsform beträgt der Abstand der Stempelformoberfläche von der Formoberfläche des Negativtiefziehwerkzeuges 2 bis 50 mm, vorzugsweise 3 bis 15 mm, in der Schließstellung (bei der Endformung) und/oder in der Schließstellung (bei der Endformung) weist die Stempelformoberfläche von der Rückseite der Folie einen Abstand von mehr als 500 »m, vorzugsweise mehr als 1,5 »m, auf.

Die Erfindung betrifft weiterhin eine vorrichtung zur Herstellung von Gegenständen aus thermoverformbaren Kunststoffbahnen nach dem Negativtiefziehverfahren, enthaltend eine Negativtiefziehform (2), die mit mindestens einer Vorrichtung (17) zur Ausübung eines Unterdruckes sowie mit einer Temperiervorrichtung (3, 11) ausgestattet ist und eine poröse, metallpartikelhaltige, luftdurchlässige Formoberflächenschicht besitzt, wobei der Negativtiefziehform (2) eine Einspannvorrichtung für die Kunststoffbahn zugeordnet ist. Gemäß der Erfindung weist die metall-, metallegierungs-, mikrometallpartikelhaltige, keramik-metall- und/oder keramik-mikrometallpartikelhaltige Oberflächenschicht (21) der Negativtiefziehform festigkeitserhöhende Zusatzstoffe mit einer durchschnittlichen Partikeldicke unter 150 »m auf, wobei die Schicht mindestens ein Metall und mindestens einen festigkeitserhöhenden Zusatzstoff (in feinteiliger Form) mit unterschiedlichen Korngrößen und/oder Konturen besitzt sowie mindestens ein Bindemittel enthält, daß die Negativtiefziehform mindestens zwei unterschiedliche Schichten (21,22,23) aufweist und die darin enthaltenen Metallpartikel und/oder festigkeitserhöhenden Zusatzstoffe gegenüber der anderen Schicht unterschiedliche Teilchengrößen und/oder unterschiedliche Zusammensetzungen besitzen.

Nach einer anderen bevorzugten Ausführungsform besteht die Vorrichtung zur Herstellung von Gegenständen aus thermoverformbaren Kunststoffbahnen nach dem Negativtiefziehverfahren aus einer Negativtiefziehform (2), die mit mindestens einer Zuleitung oder Vorrichtung zur Ausübung eines Unterdruckes (17), sowie mit einer Temperiervorrichtung (3,11) ausgestattet ist und eine poröse luftdurchlässige Formoberflächenschicht besitzt, wobei der Negativtiefziehform (2) eine Einspannvorrichtung für die Kunststoffbahn zugeordnet ist. Gemäß der Erfindung besteht die Formoberflächenschicht dieser Negativtiefziehform aus einem temperaturbeständigen Kunststoff, vorzugsweise einem Epoxidharz und/oder einem Silikonkautschuk oder Silikongummi oder enthält diesen.

Der Stempel weist nach einer bevorzugten Ausführungsform auf einer Oberflächenschicht Löcher, Poren oder Ausnehmungen, vorzugsweise Bohrlöcher, auf, wobei die Oberflächenschicht aus einem (bei den angewendeten Verfahrenstemperaturen) temperaturbeständigen Kunstharz oder Kunststoff, vorzugsweise füllstoff-, metallpartikel-, glasfasern- und/oder glasfasermattenhaltigen Kunstharz und/oder aus Metall besteht. Unter der Oberflächenschicht ist mindestens eine weitere poröse und/oder luftdurchlässige Zwischenschicht und/oder in oder an der Oberflächenschicht eine Temperier- und/oder Heizvorrichtung, vorzugsweise in Form von Leitungen oder Leitungssystemen, Kanälen und/oder Heizdrähten, angeordnet. Unter der Rückseite der Zwischenschicht oder an der Rückseite der Zwischenschicht befindet sich mindestens eine luftundurchlässige Schicht und/oder eine luftabgedichtete bzw. luftabdichtbare Kammer, eine Vakuumvorrichtung und/oder Abblasvorrichtung.

Unter der ersten luftdurchlässigen Oberschicht sind eine oder mehrere weitere Schichten mit Füllstoff und/oder Metallpartikeln und/oder einem temperaturbeständigen Bindemittel, Kunststoff oder Kunstharz, vorzugsweise Epoxidharz und/oder Silikonkautschuk, angeordnet. Die durchschnittliche Teilchengröße in diesen darunterliegenden Schichten ist größer als die der ersten Schicht, jedoch kleiner als 800 »m, vorzugsweise kleiner als 500 »m, und/oder deren Porenvolumen ist gegenüber dem Porenvolumen der Oberflächenschicht vergrößert und/oder es befinden sich in diesen Schichten auch Fasern und/oder Nadeln oder nadelähnliche Formen oder Strukturen, vorzugsweise Aluminiumnadeln, Kohlefasern und/oder Glasfasern.

Nach einer bevorzugten Ausführungsform besteht der festigkeitserhöhende Zusatzstoff ganz oder teilweise aus einem Zusatzstoff, der eine Härte über 4 (gemessen nach der Mohsschen Härteskala), vorzugsweise über 5 aufweist oder das Zusatzstoffgemisch enthält diesen harten Zusatzstoff im Gemisch mit anderen Zusatzstoffen, Fasern und/oder Metallpartikeln.

Der Zusatzstoff besteht nach einer weiteren bevorzugten Ausführungsform aus einem Metallcarbid, vorzugsweise Schwermetallcarbid und/oder Metalloxid (Aluminiumoxid und/oder Schwermetalloxide), oder enthält dieses im Gemisch mit anderen Zusatzstoffen, Füllstoffen, Fasern und/oder Metallpartikeln.

Das feinteilige oder feinstteilige Metallpulver besteht nach einer bevorzugten Ausführungsform aus mindestens einem Leichtmetall, vorzugsweise aus Aluminium und/oder mindestens einem Schwermetall, vorzugsweise rostfreiem Stahl, oder enthält eines oder mehrerer dieser Metalle oder Metallegierungsbestandteile.

Die Metallpartikel oder Metallteilchen und/oder die Füllstoffe sind in mindestens einer Schicht mit einem Kunstharz oder Bindemittel, vorzugsweise mit einem Epoxidharz, gecoatet oder überzogen (bzw. darin eingebettet).

Gemäß der Erfindung weist die erste, an der Kunststofformoberfläche angrenzende Metall-, Mikrometall- und/oder festigkeitserhöhende Zusatzstoffe enthaltende Schicht eine Schichtdicke von 1 bis 15 mm, vorzugsweise 2 bis 5 mm, auf und enthält (bezogen auf 100 Gew.-Teile Metallpartikel und/oder Zusatzstoffe) zu mehr als 60 Gew.-%, vorzugsweise mehr als 80 - Gew.-%, feinteilige Metallpartikel mit einer durchschnittlichen Metallpartikeldicke unter 60 »m, die - zusätzlich mit einem Harz überzogen sind sowie gegebenenfalls einen geringen Anteil anorganischer, organischer Fasern oder Kohlenstoffasern enthalten und als Restbestandteil festigkeitserhöhende Zusatzstoffe.

Die unter der ersten Schicht angeordnete zweite Schicht weist eine durchschnittliche Metallpartikeldicke von 70 bis 90 »m auf und besteht zu mehr als 30 Gew.-%, vorzugsweise mehr als 40 Gew.-%, aus einem Aluminiumpulver und/oder aus nadelähnlichem Aluminium und/oder anderen festigkeitserhöhenden Zusatzstoffen, das bzw. die mit einem Kunstharz oder Bindemittel, vorzugsweise Epoxidharz, überzogen ist bzw. sind.

Nach einer bevorzugten Ausführungsform enthält diese erste und/oder zweite Schicht 0,001 bis 8 Gew.-%, vorzugsweise 0,1 bis 6 Gew.-%, anorganische und/oder organische Fasern und/oder nadelähnliche Teilchen.

Nach der ersten und/oder zweiten Oberschicht sind nach einer anderen bevorzugten Ausführungsform mindestens eine dritte, vierte oder weitere Schicht angeordnet, die eine größere durchschnittliche Teilchengröße aufweisen als die der ersten bzw. zweiten Schicht, und deren durchschnittlicher Teilchendurchmesser somit in den nach der Oberschicht angeordneten Schichten zunimmt, vorzugsweise kontinuierlich zunimmt und/oder das freie Porenvolumen in den nach der Oberschicht (der Formoberfläche der Negativtiefziehform angeordneten Schichten vergrößert ist, vorzugsweise kontinuierlich vergrößert ist.

Die dritte und/oder vierte Schicht(en) enthält zu mehr als 25 Gew.-%, vorzugsweise zu mehr als 45 - Gew.-%, anorganische Fasern und/oder Kohlenstofffasern.

Vor der ersten metallpulverhaltigen Schicht ist bevorzugt eine metallpulverfreie oder metallpulverarme und/oder flexible und/oder wachshaltige bzw. wachsartige sehr dünne Oberflächenschicht und/oder Trennschicht angeordnet.

Die letzte oder n-te, die Formtrennebene begrenzende Schicht ist nach einer bevorzugten Ausführungsform eine nichtporöse abdichtende Schicht.

Nach einer bevorzugten Ausführungsform sind die Negativtiefziehform und der Stempel in axialer Richtung beweglich angeordnet. Sie stehen mit einer Bewegungsvorrichtung und/oder einer Vorrichtung zur Erzeugung eines Unter- und/oder Überdruckes in Verbindung. Die Negativtiefziehform und/oder der Stempel enthält ein Temperiersystem oder eine Temperiervorrichtung oder steht mit dieser in Verbindung. Der Stempel weist in positivform zu mehr als 50 % der Formoberfläche, vorzugsweise mehr als 65 % der Formoberfläche, die Form, Formteilbereiche oder Konturen der Negativtiefziehform auf.

Nach einer bevorzugten Ausführungsform sind der Negativtiefziehform eine Auffangwanne oder ein Auffangbehälter, sowie Düsen, Spritzen oder Spritzvorrichtungen zugeordnet, deren öffnungen und/oder Düsenwinkel auf den zur Aufnahme der Kunststoffbahn bestimmten Formraum der Negativtiefziehform gerichtet sind.

Gemäß einer bevorzugten Ausführungsform der Erfindung wird die in die Negativtiefziehform eingebrachte Kunststoffbahn durch die strukturierte, poröse und luftdurchlässige Oberfläche des Negativtiefziehwerkzeuges in der Oberfläche bzw. auf der Oberflächenschicht während der Thermoverformung strukturiert und/oder genarbt und nachfolgend oder gleichzeitig von der (nicht mit der Negativtiefziehform in Kontakt oder Verbindung stehenden) Rückseite der Kunststoffbahn her ein Behandlungsmittel auf die Kunststoffbahn aufgebracht wird.

Nach einer bevorzugten Ausführungsform des erfindungsgemäßen Verfahrens ist das Behandlungsmittel eine Kühlflüssigkeit oder ein kaltes Gas, das die in der Negativtiefziehform befindliche Kunststoffbahn auf die Entformungstemperatur oder in die Nähe der Entformungstemperatur abkühlt oder schockkühlt. Dadurch gelingt es die erzielten Narben und Strukturen auch im Mikrobereich zu erhalten, bei der Entformung in ihrer Form kaum zu beeinträchtigen, kürzere Arbeitstakte zu erzielen und unter anderem auch verformte Gegenstände oder Formteile mit verbesserten Eigenschaften zu erhalten.

Nach einer weiteren Ausführungsform wird als Behandlungsmittel ein Haftvermittler, vorzugsweise eine Haftvermittlerflüssigkeit oder eine einen Haftvermittler enthaltende Flüssigkeit, ein Klebstoff, eine im Sprühverfahren aufzubringende Kunststoffschicht und/oder eine Sperrschicht, vorzugsweise eine als Flüssigkeit oder als Flüssigkeitsgemisch aufzubringende Sperrschicht, verwendet. Als Sperrschicht werden bevorzugt kunststoffhaltige Flüssigkeiten eingesetzt, vorzugsweise Flüssigkeiten mit mindestens einem Polyacryl-, Polymethacrylsäureester, unvernetztem oder vernetztem Polyurethan, Vinylchloridhomo-, -copolymerisat, -pfropfpolymerisat, vorzugsweise Vinylchloridcopolymerisat mit Polyvinylacetat oder Polyvinylbutyral; Vinylidenhalogenidhomo- oder -copolymerisat, vorzugsweise Vinylidenchlorid oder Polyvinylidenfluorid; Olefincopolymerisat, Polyamid, kautschukartigen Terpolymerisat aus Ethylen, Propylen und einem Dien (EPDM), kautschukartigen Ethylen-Propylen-Mischpolymerisat (EPM), chloriertem Polyethylen, Polyacrylnitril oder aus einem Fluorpolymeren, vorzugsweise Polytetrafluorethylen, mindestens einem Lösungs- und/oder Verdünnungsmittel und/oder Emulgator und/oder Netzmittel und/oder Weichmacher, sowie gegebenenfalls Zusatz- und/oder Verarbeitungshilfsmittel .

Die Sperrschicht verhindert u.a., daß ungünstige Wechselwirkungen zwischen den Bestandteilen des Schaumes oder der Hinterschäumung (z.B. Polyurethanschaum) und der Kunststoffbahn auftreten.

Die Sperrschicht wird in einer Dicke von 1 »m, bis 400 »m, vorzugsweise 5 bis 350 »m, aufgetragen. Dabei wird die Sperrschicht in Form einer Verdünnungsmittel enthaltenden Dispersion oder Lösung aufgetragen, die vorzugsweise organisch-chemische kunststofflösende oder -anguellende Lösungsmittel und/oder Weichmacher und/oder Wasser als Verdünnungsmittel enthält oder daraus entsteht. Nach einer bevorzugten Ausführungsform werden auch diese Flüssigkeiten (Haftvermittler für Klebschicht und/oder für Sperrschicht) mit zur Abkühlung der in der Negativtiefziehform befindlichen verformten Kunststoffbahn benutzt.

Als Haftvermittler werden die an sich für die jeweils eingesetzten Kunststoffe bekannten Haftvermittler verwendet, vorzugsweise Ethylen-Vinylacetat-Copolymerisat, Ethylen-Vinylacetat-Kohlenmonoxid-Terpolymerisat, Ethylen-Acrylsäureester-Copolymerisat, wobei auch in diesen Fällen Lösungen, Dispersionen oder ähnliche Flüssigkeiten zum Aufbringen der Haftvermittler eingesetzt werden, die gegebenenfalls Lösungs- oder Verdünnungsmittel, Weichmacher und andere Zusatzmittel enthalten.

Das flüssige Behandlungsmittel wird auf die Rückseite der in der Negativtiefziehform befindlichen thermoverformten Kunststoffbahnen unter Sprühen, Fluten und/oder Spritzen oder ähnlichen Aufbringverfahren von Flüssigkeiten aufgebracht. Das nicht von der Kunststoffbahn aufgenommene Behandlungsmittel wird aufgefangen und weiterverwendet, vorzugsweise im Kreislauf geführt. Dadurch gelingt es, das Behandlungsmittel ohne Verluste oder ohne wesentliche Verluste aufzubringen.

Als Kunststoffbahn werden nach einer bevorzugten Ausführungsform dünne Folien mit einer Dicke von 100 bis 2500 »m, vorzugsweise 200 bis 1500 »m, und/oder Folien mit einer Shore-D-Härte von 20 bis 60, vorzugsweise 25 bis 40, unter Narb- und/oder Dekorgebung im Negativtiefziehverfahren verformt. Die Kunststofffolien werden bevorzugt mit einem wärmestabilen Schaum, vorzugsweise Polyolefin (insbesondere Polypropylenschaum) oder einem mit einem Polyurethanschaum, mit einer Schaumschichtdicke von 0,5 bis 10 mm, vorzugsweise 1,5 bis 5 mm, laminiert oder versehen, bevor sie in der Negativtiefziehform dreidimensional verformt und die Folien-oberfläche genarbt und/oder oberflächenstrukturiert werden, wobei gegebenenfalls die Schaumschicht mit einem Träger oder einer Trägerschicht hinterlegt wird. Der Träger wird nach einer Ausführungsform vorzugsweise vorgeformt, lagegenau ausgerichtet und mit dem Schaum und/oder der verformten Kunststoffolienbahn verbunden.

Die Kunststoffbahn wird nach der dreidimensionalen Verformung, Narbung und/oder Oberflächenstrukturierung in dem Werkzeug nach oder während der Abkühlung entweder in der Form selbst oder in einem getrennten Arbeitsgang und/oder in einer anderen Form mit einem weichen bis mittelharten Schaum, vorzugsweise Polyurethanschaum hinterschäumt, nachdem ein Behandlungsmittel auf die Rückseite der Kunststoffbahn aufgebracht worden ist. Gegebenenfalls bei der Hinterschäumung oder zuvor wird zusätzlich ein Träger oder eine Trägerschicht eingelegt. Gemäß dem erfindungsgemäßen Verfahren wird die verformte Kunststoffbahn vor der Hinterschäumung mit einer Sperr-, Haft- und/oder Klebstoffschicht oder zusätzlichen Kunststoffschicht versehen.

Im Unterschied zu dem Positivtiefziehverfahren kann das erfindungsgemäße Verfahren verschiedene Muster des Urmodels wiedergeben, so z.B. zwei oder mehrere Arten von Narben, Ziernähten, Buchstaben, Designs, Knöpfe und/oder Holznarben oder andere Strukturierungen. Die verwendbaren Kunststoffbänder, -folien oder -platten bestehen aus an sich bekannten Kunststoffen, vorzugsweise aus geschäumtem Kunstleder, PVC-Schaum oder Polyolefinschaumlaminaten oder geschäumten Kunstleder oder sind nicht geschäumte Folien, Bänder oder Platten, die im allgemeinen kurz zusammengefaßt Kunststoffbahnen im Rahmen der vorliegenden Anmeldung genannt werden.

Sie werden direkt oder in einem weiteren Arbeitsgang mit einem steifen Träger hinterlegt, wodurch Produkte mit weichem Griff und genauen Wiedergaben von Oberflächenstrukturen erreicht werden.

Mit Hilfe des erfindungsgemäßen Verfahrens gelingt es verschiedenfarbige Materialien zu verformen, z.B. Kunststoffbahnen mit Wolkendruckdesign und dergleichen.

Der Zeitaufwand für die Formhersteller ist kürzer gegenüber dem Verfahren "Slush-Moulding" und wird bei der Thermoverformung im Arbeitstakt durch das erfindungsgemäß verwendete Behandlungsmittel noch weiter abgekürzt.

In dem Negativtiefziehverfahren werden bevorzugt Kunststoffolien, kunststoffhaltige Bahnen, Kunststoffbahnen oder Kunststoffplatten verformt, die aus Kunststoff, einer Kunststoffmischung oder Kunststofflegierung und bezogen auf 100 Gew.-Teile Kunststoff, Kunst-stoffmischung oder Kunststofflegierung 0,01 bis 15 Gew.-Teile, vorzugsweise 0,1 bis 6 Gew.-Teile, Verarbeitungshilfsmittel, sowie gegebenenfalls zusätzlich Füllstoffe, Farbpigmente, Farbstoffe oder Stabilisierungsmittel, Flammschutzmittel, Weichmacher oder anderen Zusatzstoffen bestehen oder diese enthalten. Insbesondere werden nach einer bevorzugten Ausführungsform im Negativtiefziehverfahren emissionsarme Kunststoffbahnen (Kunststoffolien, Kunststoffbahnen, kunststoffhaltige Bahnen oder Kunststoffplatten) verformt, wobei der Gesamtgehalt der bei der Verformungstemperatur und Verformungszeit flüchtigen Bestandteile kleiner als 3 Gew.-%, vorzugsweise kleiner als 2 Gew.-%, ist.

Durch diese Ausführungsform wird sichergestellt, daß die poröse, vorzugsweise mikroporöse Negativtiefziehform auch funktionsfähig bleibt und eine nicht gewünschte Verstopfung der Mikroporen weitgehend vermieden wird.

Der Kunststoff, die Kunststoffmischung oder Kunststofflegierung der emmissionsarmen Kunststoffbahnen (Kunststoffolien oder Kunststoffplatten) besteht aus Vinylchloridhomo- oder -copolymerisat, vorzugsweise in Kombination mit einem plastifizierenden und/oder elastomermodifizierten Thermoplasten; aus einem Olefinhomo- und/oder -copolymerisat, chlorierten Polyethylen, Ethylen-Propylen-Copolymerisat (EPM), Ethylen-Propylen-Dien-Polymerisat (EPDM), thermoplastischen Polyester, thermoplastischen Polyurethan, kautschukartige Polyesterurethan und/oder Polyvinylidenfluorid, oder enthält einen dieser Kunststoffe als Bestandteil.

Der Kunststoff, die Kunststoffmischung oder die Kunststofflegierung besteht aus Vinylchloridhomo- oder -copolymerisat und einem plastifizierenden und/oder elastomer modifizierten Thermoplasten, Ethylen-Vinylacetat-Copolymerisat, vorzugsweise mit einem Acetatgehalt von größer als 60 Gew.- %, Ethylenvinylacetat-Kohlenmonoxid-Terpolymerisat (Elvaloy), einen thermoplastischen Kautschuk, vorzugsweise Ethylen-Propylen-Copolymerisat (EPM) und/oder Ethylen-Propylen-Dien-Terpolymerisat (EPDM), einen Kautschuk auf der Basis von Styrolpolymerisat oder Styrolblockpolymerisaten, chloriertem Polyethylen, ein thermoplastisches Polyurethan, ein thermoplastisches Polyesterharz, Olefinelastomer, Acrylat- und/oder Methacrylathomoco- und -pfropfpolymerisate, Nitrilkautschuk, Methylbutadien-Styrolpolymerisat (MBS) sowie gegebenenfalls anderen Modifizierungsmitteln, vorzugsweise Styrol-Acrylnitril-Copolymerisate (SAN), Acrylnitril-Butadienharz (NBA), Acrylnitril-Butadien-Copolymerisat (ABS), ASA, AEN, ABS und MABS (Butadien-Styrolmaleinsäureteryolymerisat), Mischungen mit Adipatcarbonmischestern und/oder aliphatische oder aromatische Carbonsäureester, vorzugsweise Trimilithsäureester, Adipate oder enthält ein oder mehrere dieser Bestandteile.

### Zeichnungsbeschreibung

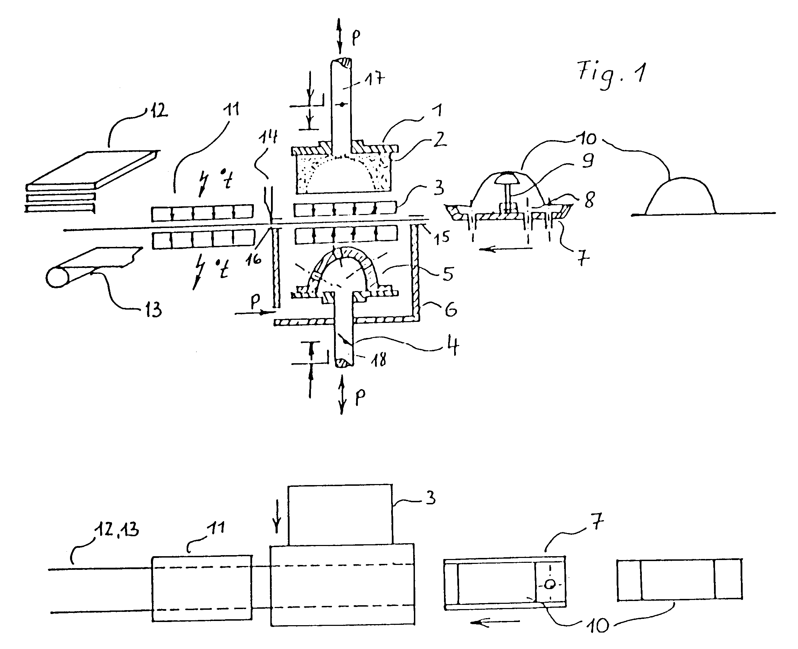

In den Figuren 1 bis 3 sind Ausführungsformen der erfindungsgemäßen Vorrichtung und des erfindungsgemäßen Verfahrens schematisch dargestellt.

In Fig. 1 ist unter Ziffer 1 die Oberstempelplatte mit der porösen, luftdurchlässigen Negativtiefziehform (2), die mehrere Schichten aufweist, schematisch dargestellt. Unterhalb der Negativtiefziehform (2) sind die Heizvorrichtungen (3) (Ober- und Unterheizung) angeordnet, die nach einer Ausführungsform auch verschiebbar, insbesondere seitlich verschiebbar ausgebildet sind.

Unter Ziffer 4 ist der Unterstempel bzw. die Unterstempelplatte, wiedergegeben, wobei die Stempeloberfläche, vorzugsweise Positivstempel vorzugsweisweise die Form oder Formteilbereiche der Negativtiefziehform (in Positivform) aufweist. Eine derartige vereinfachte Stempelform als Positivwerkzeug (5) ist in der Zeichnung schematisch dargestellt. Die Vorrichtung enthält nach einer bevorzugten Ausführungsform eine Druckkammer (6), die insbesondere Verfahrensvorteile bringt, wenn Stützluft beim Heizen und/oder Vorblasen und/oder ein Vakuum angelegt wird.

Unter Ziffer 12 sind schematisch Folien oder Folienabschnitte und unter Ziffer 13 eine abzuwickelnde Kunststoffolie oder Kunststoffolienbahn dargestellt, die der Thermoverformung im Negativtiefziehwerkzeug unterworfen werden sollen. Diese werden vor der Einführung in die Negativtiefziehform einer Vorheizung durch die Vorheizvorrichtung (11) unterworfen. Nach dem Durchgang und der Verformung in der Negativtiefziehform gelangen die geformten Folien, Platten und dergleichen zu einem Kühl- und/oder Abnahmetisch (7), der vorzugsweise mit Sprühduschen und/oder einem oder mehreren Hilfsstempeln versehen ist. Durch Sprühduschen (8) kann eine rasche Abkühlung der verformten Platte erfolgen. Der mitverwendete Hilfsstempel oder die Hilfsstempel dienen dazu, die erhaltene Form unmittelbar nach der Herausnahme der verformten Folie oder Platte aus der Negativtiefziehform abzustutzen. Sie können nach einer Ausführungsform hydraulisch gesteuert werden.

Unter Ziffer 10 ist schematisch die thermoverformte Kunststoffplatte oder Kunststoffbahn dargestellt. Die unterhalb der Vorrichtung angeordnete Zeichnung gibt schematisch die einzelnen Verfahrensschritte wieder.

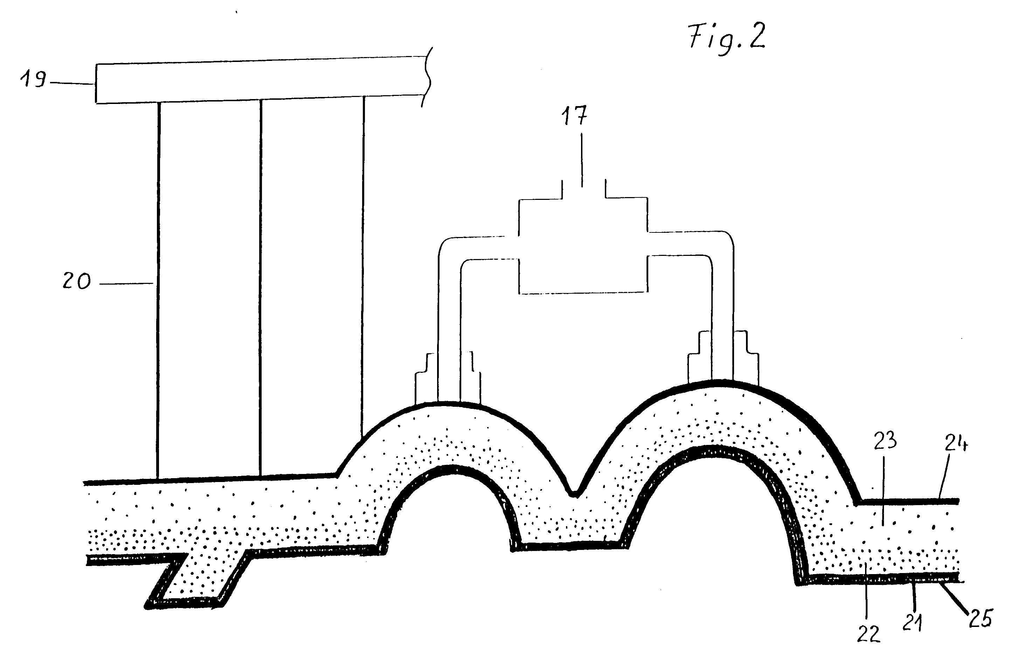

In Fig. 2 ist schematisch ein Schnitt durch die Negativtiefziehform dargestellt. Auf der mikroporösen luftdurchlässigen Formoberflächenschicht, die eine metall-, metallegierungs-, mikrometallpartikelhaltige, kermamik-metall- und/oder keramikmikrometallpartikelhaltige und/oder feinstteilige Füllstoffe enthaltende Schicht (21) aufweist, ist eine Oberflächenschicht nach einer vorzugsweisen Ausführungsform angeordnet, die nicht metallpulverhaltig ist und eine wachshaltige bzw. wachsartige Schicht und/oder Trennschicht darstellt. Unter der Oberschicht (21) sind mehrere Schichten (22) (23) angeordnet, deren durchschnittlicher Teilchendurchmesser und/oder in denen das freie Porenvolumen größer ist als in der Oberschicht (21). Die unterste Schicht (24) oder die untersten schichten (24) sind nicht luftdurchlässig und/oder nicht porös und bestehen aus Kunstharz oder einem anderen Bindemittel sowie gegebenenfallS Zusatzstoffen, so daß die Schicht (24) eine Dichte darstellt, die auch die Anlegung eines Überdruckes und/oder Unterdruckes ermöglicht.

Die Negativtiefziehform enthält weiterhin eine Vorrichtung zur Anlegung eines Vakuums (17) und/oder eines Überdruckes (17) oder steht mit diesen Vorrichtungen in Verbindung. Die Negativtiefziehform ist vorzugsweise durch eine feste Platte (19) begrenzt, die ein Stützsystem (20) enthalten kann.

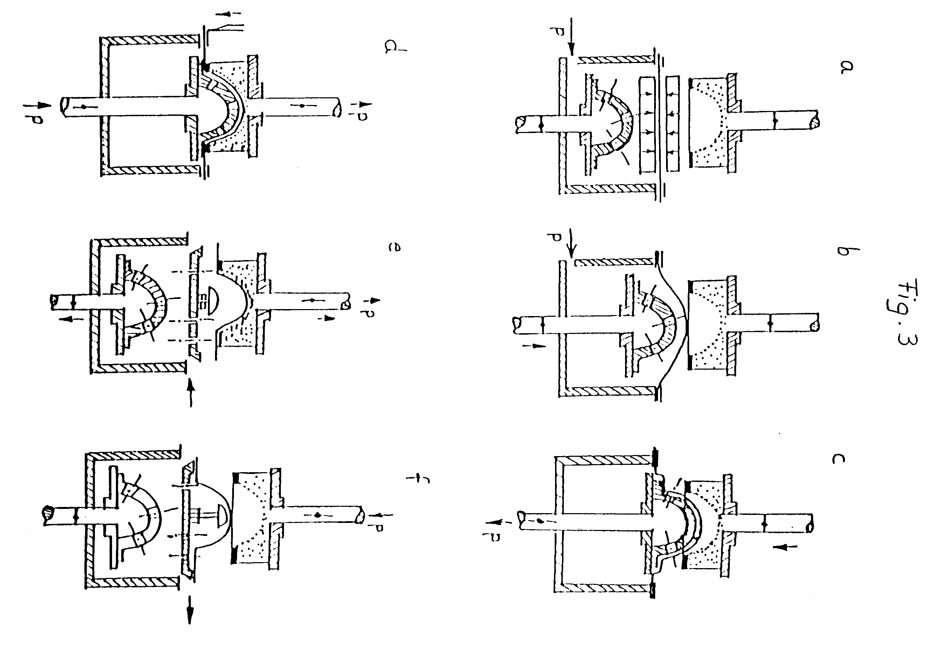

In Fig. 3 sind Arbeitsschritte des erfindungsgemäßen Verfahrens schematisch dargestellt. Bei der Arbeitsstufe a) erfolgt eine Beheizung der eingespannten Folienbahn mittels Stützluft. Kurz vor der Thermoverformung bzw. vor der Thermoverformung nähert sich der Stempel, vorzugsweise Positivstempel, der die Form oder Formteilbereiche der Negativtiefziehform in Positivform aufweist, der erhitzten, eingespannten oder befestigten Kunststoffolie, wobei der Stempel in Pfeilrichtung nach oben bewegt wird. Durch Erhöhung des Gasdruckes wird in der Arbeitsstufe b) die Kunststoffolie in Richtung der Formöffnung der Negativtiefziehform durchgebogen. Im Arbeitsschritt c) bewegt sich die Negativtiefziehform auf die in Richtung der Negativtiefziehform vorbewegte Stempeloberfläche zu ohne die Kunststoffolie zunächst zu berühren, wobei der Stempel die eingespannte Folie zunächst verformt. Damit die Kunststoffolie die mikroporösen Strukturen der Stempeloberfläche oder Stempelteiloberfläche annimmt, wird ein Unterdruck an den Stempel angelegt, so daß die Kunststoffolie in die mikroporöse Strukturen eingesaugt wird und diese Formoberflächen und Mikrostrukturen annimmt. Im Arbeitsschritt d) hat sich die Formöffnung der Negativtiefziehform weiter der Stempeloberfläche genähert. Es erfolgt eine abdichtende Schließung an der Negativtiefziehform, vorzugsweise eine luftabschließende Abdichtung der Formöffnung mit dem Stempel oder einer Stempelteiloberfläche und/oder einem Teil der Druckkammer. Während oder kurzfristig nach der abdichtenden Schließung wird das von der Stempelseite, -fläche oder vom Stempel her angelegte Vakuum aufgehoben und vorzugsweise ein geringer Überdruck durch den Stempel hindurch auf die verformte oder zu verformende Kunststoffoberfläche ausgeübt, wobei die gesamte Formoberflächenstruktur vom Negativtiefziehwerkzeug auf die Kunststoffolie übertragen wird. Stufenweise erfolgt nach diesem Arbeitsschritt eine Aufhebung des angelegten Vakuums und/oder Überdruckes der Negativtiefziehform und/oder der Stempel wird zurückbewegt, so daß die hergestellte Kunststofform freigegeben wird, was im Arbeitsschritt e) schematisch dargestellt ist. Zusätzlich kann eine Kühlung mit Sprühduschen oder einer Abstützung mittels eines Hilfsstempels erfolgen bis im Arbeitsschritt f) die Entnahme des Formlinges unter Anlegung eines leichten Druckes an die Negativtiefziehform erfolgen kann.

## Patentansprüche

1. Verfahren zur Herstellung von Gegenständen aus thermoverformbaren Kunststoffbahnen, wobei die Kunststoffbahnen aufgeheizt, durch Spann- oder Abdichtungsrahmen gespannt und unter Mitverwendung eines Druckunterschiedes mit ihrer Vorderseite in eine Form eingebracht werden, die eine luftdurchlässige Formoberflächenschicht besitzt und in der die endgültige Formgestaltung und die Narbgebung durch Thermoverformung durchgeführt wird, dadurch gekennzeichnet, daß unter Mitverwendung eines Druckunterschiedes und/oder durch einen Stempel (5) die Kunststoffbahn (13) zur Negativtiefziehform (2) hin gewölbt und vorgeformt wird, daß zwischen der Kunststoffbahn und der kälteren Negativtiefziehform eine Temperaturdifferenz von mehr als 50 °C eingehalten wird, daß vor der Thermoverformung auf der Rückseite der Kunststoffbahn eine Oberflächenschicht auf eine Temperatur eingestellt wird, die um mehr als 5 °C niedriger ist als die Temperatur auf der der Negativtiefziehform (2) zugewandten Kunststoffbahnfläche, während auf der der Negativtiefziehform (2) zugewandten Seite der Kunststoffbahn die Oberflächenschicht auf eine (gegenüber der anderen Oberflächenschicht) höhere Temperatur innerhalb des thermoplastischen Bereiches bis 260°C aufgeheizt wird und die Narbgebung mit der, eine poröse luftdurchlässige Formoberflächenschicht (21) aufweisende Negativtiefziehform (2) durchgeführt wird.

2. Verfahren nach Anspruch 1, dadurch gekennzeichnet, daß vor der Thermoverformung auf der Rückseite der Kunststoffbahn eine Oberflächenschicht auf eine Temperatur durch gesteuertes Heizen oder gesteuertes Abkühlen eingestellt wird, die um mehr als 10 °C niedriger ist als die Temperatur auf der der Negativtiefziehform (2) zugewandten Kunststoffolienbahn und daß vor dem Anlegen eines Unterdruckes an die Negativtiefziehform eine abdichtende Schließung erfolgt und danach ein Unterdruck angelegt wird.

3. Verfahren nach Ansprüchen 1 und 2, dadurch gekennzeichnet, daß kurz vor der Thermoverformung der Stempel (5), vorzugsweise Positivstempel sich der erhitzten, eingespannten, Kunststoffbahn nähert, daß über die Stempeloberfläche die Kunststoffbahn angelegt oder angesaugt wird und dabei die Stempeloberflächenform ganz oder in - Teilbereichen annimmt, daß danach an der Negativtiefziehform (2) eine abdichtende Schließung der Formöffnung erfolgt und während oder kurzfristig nach der abdichtenden Schließung das vom Stempel her angelegte Vakuum aufgehoben und ein Druck auf die Kunststoffbahnrückseite über den Stempel oder die Stempeloberfläche von
4 x 10² Pa bis 4 x 10⁵ Pa, vorzugsweise
1 x 10³ Pa bis 1,5 x 10⁵ Pa,
und/oder von der Negativtiefziehform (2) her ein Unterdruck unter Ansaugung der Kunststoffbahn an die Negativtiefziehform ausgeübt wird.

4. Verfahren nach einem oder mehreren der Ansprüche 1 bis 3, dadurch gekennzeichnet, daß die Negativtiefziehform in Kombination mit einer Druckkammer, verwendet wird.

5. Verfahren nach einem oder mehreren der Ansprüche 1 bis 4, dadurch gekennzeichnet, daß die gespannte aufgeheizte Kunststoffbahn mittels Stützgas oder einem in Gegenrichtung angelegten Vakuum gehalten oder einen Stempel (5) und in Richtung der Negativtiefziehform verformt wird, daß danach die Negativtiefziehform in Richtung der Verformung oder des Stempels bewegt wird, und gleichzeitig oder nachfolgend ein Unterdruck angelegt und die geformte Kunststoffbahn auf die Negativtiefziehform (2) übertragen wird und dort die Endformung annimmt, daß danach die durch den Stempel verschlossene Negativtiefziehform (2) geöffnet wird, indem die Negativtiefziehform oder der Stempel zurückbewegt werden.

6. Verfahren nach einem oder mehreren der Ansprüche 1 bis 5, dadurch gekennzeichnet, daß die Temperatur der Negativtiefziehform (2) während der endgültigen Formgestaltung auf
unter 100 °C, vorzugsweise
unter 85 °C,
eingestellt wird und eine Negativtiefziehform verwendet wird, die eine poröse luftdurchlässige, vorzugsweise mikroporöse luftdurchlässige, Formoberflächenschicht (21) besitzt, die eine metall-, metallegierungs-, mikrometallpartikelhaltige, keramik-metall- und/oder keramikmikrometallpartikelhaltige und festigkeitserhöhende Zusatzstoffe enthaltende Schicht oder Oberfläche mit einer durchschnittlichen Partikeldicke unter 150 »m, vorzugsweise unter 60 »m, aufweist.

7. Verfahren nach einem oder mehreren der Ansprüche 1 bis 6, dadurch gekennzeichnet, daß der Stempel temperiert (5) wird.

8. Verfahren nach einem oder mehreren der Ansprüche 1 bis 7, dadurch gekennzeichnet, daß der Abstand der Stempelformoberfläche von der Formoberfläche des Negativtiefziehwerkzeuges
2 bis 50 mm, vorzugsweise
3 bis 15 mm,
in der Schließstellung (bei der Endformung) beträgt und/oder daß in der Schließstellung (bei der Endformung) die Stempelformoberfläche von der Rückseite der Folie einen Abstand von
mehr als 500 »m, vorzugsweise
mehr als 1,5 »m,
aufweist.

9. Vorrichtung zur Herstellung von Gegenständen aus thermoverformbaren Kunststoffbahnen nach dem Negativtiefziehverfahren, enthaltend eine Negativtiefziehform (2), die mit mindestens einer Vorrichtung (17) zur Ausübung eines Unterdruckes sowie mit einer Temperiervorrichtung (3,11) ausgestattet ist und eine poröse, metallpartikelhaltige lufttdurchlässige Formoberflächenschicht besitzt, wobei der Negativtiefziehform (2) eine Einspannvorrichtung für die Kunststoffbahn zugeordnet ist, dadurch gekennzeichnet, daß die metall-, metallegierungs-, mikrometallpartikelhaltige, keramik-metall- und/oder keramik-mikrometallpartikelhaltige Oberflächenschicht (21) der Negativtiefziehform festigkeitserhöhende Zusatzstoffe mit einer - durchschnittlichen Partikeldicke unter 150 »m aufweist, daß die Schicht mindestens ein Metall und mindestens einen festigkeitserhöhenden Zusatzstoff (in feinteiliger Form) mit unterschiedlichen Korngrößen und/oder Konturen besitzen sowie mindestens ein Bindemittel enthält, daS die Negativtiefziehform mindestens zwei unterschiedliche Schichten (21,22,23) aufweist und die darin enthaltenen Metallpartikel und/oder festigkeitserhöhenden Zusatzstoffe gegenüber der anderen Schicht unterschiedliche Teilchengrößen und/oder unterschiedliche Zusammensetzungen besitzen.

10. Vorrichtung zur Herstellung von Gegenständen aus thermoverformbaren Kunststoffbahnen nach dem Negativtiefziehverfahren, enthaltend eine Negativtiefziehform (2), die mit mindestens einer Zuleitung oder Vorrichtung zur Ausübung eines Unterdruckes (17), sowie mit einer Temperiervorrichtung (3,11) ausgestattet ist und eine poröse luftdurchlässige Formoberflächenschlcht besitzt, wobei der Negativtiefziehform (2) eine Einspannvorrichtung für die Kunststoffbahn zugeordnet ist, dadurch gekennzeichnet, daß die Formoberflächenschicht der Negativtiefziehform aus einem temperaturbeständigen Kunststoff, vorzugsweise einem Epoxidharz, und/oder einem Siliconkautschuk oder Silicongümmi besteht oder diesen enthält.

11. Vorrichtung nach Anspruch 9 und 10, dadurch gekennzeichnet, daß der Stempel auf einer Oberflächenschicht Löcher, Poren oder Ausnehmungen aufweist, wobei die Oberflächenschicht aus einem temperaturbeständigen Kunststoff und/oder aus Metall besteht, daß unter der Oberflächenschicht mindestens eine weitere poröse oder luftdurchlässige Zwischenschicht und/oder in oder an der Oberflächenschicht eine Temperiervorrichtung angeordnet ist und unter der Rückseite der Zwischenschicht oder an der Rückseite der Zwischenschicht mindestens eine luftundurchlässige Schicht oder eine luftabgedichtete Kammer, eine Vakuumvorrichtung und/oder Abblasvorrichtung angeordnet ist.

12. Vorrichtung nach einem oder mehreren der Ansprüche 9 bis 11, dadurch gekennzeichnet, daß unter der ersten luftdurchlässigen Oberschicht (21) der Negativtiefziehform (2) eine oder mehrere weitere Schichten (22,23) mit einem festigkeitserhöhenden Zusatzstoff und/oder Metallpartikeln und mindestens einem temperaturbeständigen Bindemittel angeordnet sind, deren durchschnittliche Teilchengröße größer ist als die der ersten Schicht, jedoch kleiner als 800 »m, vorzugsweise kleiner als 500 »m, und/oder die Fasern und/oder Nadeln oder nadelähnlichen Formen oder Strukturen, vorzugsweise Aluminiumnadeln, Kohlefasern und/oder Glasfasern, enthalten und/oder deren Porenvolumen gegenüber dem Porenvolumen der Oberflächenschicht vergrößert ist.

13. Vorrichtung nach einem oder mehreren der Ansprüche 9 bis 12 dadurch gekennzeichnet, daß der festigkeitserhöhende Zusatzstoff ganz oder teilweise aus einem Zusatzstoff besteht, der eine Härte über 4 (gemessen nach der Mohsschen Härteskala), vorzugsweise über 5, aufweist oder diesen harten Zusatzstoff im Gemisch mit anderen Zusatzstoffen, Fasern oder Metallpartikeln enthält.

14. Vorrichtung nach einem oder mehreren der Ansprüche 9 bis 13, dadurch gekennzeichnet, daß der - Zusatzstoff aus einem Metallcarbid, vorzugsweise Schwermetallcarbid und/oder Metalloxid besteht oder dieses im Gemisch enthält.

15. Vorrichtung nach einem oder mehreren der Ansprüche 9 bis 14, dadurch gekennzeichnet, daß das feinteilige oder feinstteilige Metallpulver aus mindestens einem Leichtmetall, vorzugsweise aus Aluminium, und/oder mindestens einem Schwermetall, vorzugsweise rostfreiem Stahl, besteht oder eines oder mehrere dieser Metalle oder Metalllegierungsbestandteile enthält.

16. Vorrichtung nach einem oder mehreren der Ansprüche 9 bis 15, dadurch gekennzeichnet, daß die Metallpartikel oder Metallteilchen und/oder die festigkeitserhöhenden Zusatzstoffe in mindestens einer Schicht mit einem Kunstharz oder Bindemittel, vorzugsweise mit einem Epoxidharz, gecoatet oder überzogen sind.

17. Vorrichtung nach einem oder mehreren der Ansprüche 9 bis 16, dadurch gekennzeichnet, daß die erste, an der Kunststofformoberfläche angrenzende Metall, Mikrometall und gegebenenfalls festigkeitserhöhende Zusatzstoffe enthaltende Schicht eine Schichtdicke von
1 bis 15 mm, vorzugsweise
2 bis 5 mm,
aufweist und (bezogen auf 100 Gew.-Teile Metallpartikel und festigkeitserhöhende Zusatzstoffe) zu
mehr als 60 Gew.-%, vorzugsweise
mehr als 80 Gew.-%,
(bezogen auf den Gehalt der Metallpartikel, Zusatzstoffe, Fasern und dergleichen, jedoch ohne Bindemittel oder Kunstharzbindemittel - berechnet als 100 Gew.-%) feinteilige Metallpartikel mit einer durchschnittlichen Metallpartikeldicke unter 60 »m enthält, die zusätzlich mit einem Bindemittel oder Harz überzogen sind sowie gegebenenfalls einen geringen Anteil anorganischer, organischer oder Kohlenstoffasern und als Restbestandteil festigkeitserhöhende Zusatzstoffe enthalten.

18. Vorrichtung nach einem oder mehreren der Ansprüche 9 bis 17, dadurch gekennzeichnet, daß die unter der ersten Schicht (21) angeordnete zweite Schicht (22) eine durchschnittliche Metallpartikeldicke (ausgenommen Nadeln oder Fasern) von unter 90 »m, vorzugsweise unter 70 »m, aufweist und zu
mehr als 30 Gew.-%, vorzugsweise
mehr als 40 Gew.-%,
aus Metallpartikeln, vorzugsweise aus einem Aluminiumpulver und/oder aus nadelähnlichem Aluminium und/oder Zusatzstoffen besteht, das bzw. die mit einem Kunstharz oder Bindemittel, vorzugsweise Epoxidharz, überzogen ist bzw. sind.

19. Vorrichtung nach einem oder mehreren der Ansprüche 9 bis 18, dadurch gekennzeichnet, daß diese erste (21) und/oder zweite Schicht (22)
0,001 bis 8 Gew.-%, vorzugsweise
0,1 bis 6 Gew.-%,
anorganische und/oder organische Fasern und/oder nadelähnliche Teilchen enthält.

20. Vorrichtung nach einem oder mehreren der Ansprüche 9 bis 19, dadurch gekennzeichnet, daß nach der ersten (21) und/oder zweiten Oberschicht (22) mindestens eine dritte, vierte oder weitere (23) Schicht angeordnet ist, die eine größere durchschnittliche Teilchengröße aufweist als die der ersten bzw. zweiten Schicht, und deren durchschnittlicher Teilchendurchmesser somit in den unter der Oberschicht angeordneten Schichten zunimmt, vorzugsweise kontinuierlich zunimmt, - und/oder das freie Porenvolumen in den nach der - Oberschicht (der Formoberfläche der Negativtiefziehform) angeordneten Schichten vergrößert ist, vorzugsweise kontinuierlich vergrößert ist.

21. Vorrichtung nach einem oder mehreren der Ansprüche 9 bis 20, dadurch gekennzeichnet, daß die dritte und/oder vierte Schicht(en)
weniger als 30 Gew.-%, vorzugsweise
weniger als 25 Gew.-%,
anorganische Fasern, vorzugsweise Glasfasern, und/oder Kohlenstoffasern (bezogen auf den Gehalt der Metallpartikel, Zusatzstoffe und Fasern berechnet zu 100 Gew.-% - ohne Bindemittel) enthält oder enthalten.

22. Vorrichtung nach einem oder mehreren der Ansprüche 9 bis 21, dadurch gekennzeichnet, daß vor der ersten metallpulverhaltigen Schicht eine metallpulverfreie oder metallpulverarme Oberflächenschicht oder Kunststoffschicht und/oder Trennschicht angeordnet ist.

23. Vorrichtung nach einem oder mehreren der Ansprüche 9 bis 22, dadurch gekennzeichnet, daß die letzte oder n-te, die Formtrennebene begrenzende, Schicht eine nichtporöse abdichtende Schicht (24) ist.

24. Vorrichtung nach einem oder mehreren der Ansprüche 9 bis 23, dadurch gekennzeichnet, daß die Negativtiefziehform (2) und der Stempel (5) in axialer Richtung beweglich angeordnet sind, mit einer Bewegungsvorrichtung und/oder einer Vorrichtung zur Erzeugung eines Unter- und/oder Überdruckes in Verbindung stehen und die Negativtiefziehform und/oder der Stempel ein Temperiersystem oder eine Temperiervorrichtung enthält oder mit dieser in Verbindung steht, daß der Stempel in Positivform zu mehr als 50 % der Formoberfläche, vorzugsweise mehr als 65 % der Formoberfläche, die Form, Formteilbereiche oder Konturen der Negativtiefziehform aufweist.

25. Vorrichtung nach einem oder mehreren der Ansprüche 9 bis 24, dadurch gekennzeichnet, daß der Negativtiefziehform eine Auffangwanne oder ein Auffangbehälter sowie Düsen, Spritzen oder Spritzvorrichtungen zugeordnet sind, deren öffnungen und/oder Düsenwinkel auf den zur Aufnahme der Kunststoffbahn bestimmten Formraum der Negativtiefziehform gerichtet sind.

## Claims

1. Process for producing objects from heat-deformable webs of plastic, whereby webs of plastic concerned are heated up, are set under tension by means of a jig or a sealing frame and are introduced with their front faces into a mould, using a pressure difference, a said mould having a free-venting surface layer, final forming and pitting being carried out by heat-deformation in a said mould, wherein, with use of a pressure difference and/or a press (5) a web of plastic (13) is arched and projected into a negative deep drawing mould, and a temperature difference of more than 50°C is maintained between a web of plastic concerned and a colder negative deep drawing mould, and a surface layer is set to a temperature which is more than 5°C lower than a temperature on a surface of a web of plastic facing a negative deep drawing mould (2), while, on a side of a web of plastic which faces a negative deep drawing mould (2), a surface layer is heated (in relation to another surface layer) to a higher temperature within a heat-deformation range up to 260°C, and pitting is effected with a negative deep drawing mould (2) which has a porous, free-venting mould surface layer (21).

2. Process in accordance with claim 1, wherein, before heat-deformation, a surface layer on a reverse side of a web of plastic is set to a temperature, by controlled heating or controlled cooling, which is more than 10°C lower than a temperature on a web plastic sheet facing a negative deep drawing mould (2), and, before application of a negative pressure to a negative deep drawing mould, sealing closing occurs and then a negative pressure is applied.

3. Process in accordance with claim 1 and 2, wherein, just before heat-deformation, a press (5), preferably a positive press moves nearer to a heated, tensioned web of plastic, and a said web of plastic is laid over or sucked onto a surface of a said press and in this way partly or fully takes on a surface form of a press, and then an opening of a mould concerned is sealed closed on a negative deep drawing mould (2), and, during or just after closure sealing, a vacuum applied back from a press is lifted and a pressure of
4 x 10² - 4 x 10⁵ Pa, preferably
1 x 10³ - 1.5 x 10⁵ Pa
is applied to a reverse side of a web of plastic, by means of a press concerned or its surface and/or a negative pressure is applied, leading back from a negative deep drawing mould (21) with suction of a web of plastic onto a negative deep drawing mould.

4. Process in accordance with one or several of claims 1 to 3, wherein a negative deep drawing mould is used in combination with a pressure chamber.

5. Process in accordance with one or several claims 1 to 4, wherein a tensioned, heated web of plastic is held by means of a supporting gas or a vacuum applied in an opposite direction or a tensioned, heated web of plastic is deformed by a press (5) in a direction of a negative deep drawing mould, and then a negative deep drawing mould is moved in a direction of a deformation or of a press, and, simultaneously or afterwards, a negative pressure is applied and a shaped web of plastic is transferred onto a negative deep drawing mould (2) and there takes on its final form, and then a negative deep drawing mould (2) which has been closed by a press is opened by movement backwards of a negative deep drawing mould concerned or of a press.

6. Process in accordance with one or several of claims 1 to 5, wherein a temperature of a negative deep drawing mould (2) is set to
less than 100°C and preferably to
less than 85°C
during final forming and a negative deep drawing mould is used which has a porous, free-venting, preferably micro-porous, free-venting, surface layer (21) which has a layer or surface, containing a metal, metal alloy, metal micro-particle-containing or ceramic-metal added metal and/or a ceramic metal micro-particle-containing added material which increases durability, with an average particle thickness of less than 150 »m, preferably less than 60 »m.

7. Process in accordance with one or several of claims 1 to 6, wherein a press (5) is heat-treated.

8. Process in accordance with one or several of claims 1 to 7, wherein a separation of a surface of a press from a surface of a form of a negative deep drawing tool is
2 - 50 mm, preferably
3 - 15 mm,
in a closed position (for final shaping) and/or, in a closed position (for final shaping), a surface of a pressing form is separated from a reverse side of a sheet by
more than 500 »m, preferably
more than 1.5 »m.

9. Device for production of items from heat-deformable webs of plastic in accordance with a negative deep drawing process, comprising a negative deep drawing mould (2) which is fitted with at least one device (17) for exerting a negative pressure and with a tempering device (3, 11) and a porous, mould surface layer which contains metal particles and is free-venting, whereby a negative deep drawing mould (2) is associated with a tensioning device for a web of plastic, wherein a metal, metal alloy, metal micro-particle-containing, ceramic metal surface layer (21) of a negative deep drawing mould and/or ceramic metal micro-particle-containing surface layer (21) of a negative deep drawing mould have an added material, which increases durability, with an average particle thickness of less than 150 »m, and a layer concerned contains at least one (fine) added material and at least one (fine) added material which increases durability, with different grain-sizes and/or peripheral forms and containing at least one bonding agent, and a negative deep drawing mould has at least two different layers (21, 22, 23) and metal particles and/or added materials which increase durability contained in it have difference particle-sizes and/or different compositions than those of another layer.

10. Device for producing items from heat-deformable webs of plastic, in accordance with a negative deep drawing process, containing a negative deep drawing mould (2) which is fitted with at least a feed pipe or a device for exerting a negative pressure (17), and with a tempering device (3, 11) and having a porous, free-venting surface layer, whereby a negative deep drawing mould (2) is associated with a tensioning device for a web of plastic, wherein a surface layer of a mould of a negative deep drawing mould is made of a temperature-resistant synthetic material, preferably an epoxy resin and/or a silicon rubber or a silicon gum, or contains these.

11. Device in accordance with claims 9 and 10, wherein a press has holes, pores or recesses on a surface layer, whereby a surface layer is made of a temperature-resistant synthetic material and/or metal, and at least one further porous or free-venting intermediate layer is disposed under a surface layer, and/or a tempering device is disposed in or on a surface layer, and at least one free-venting layer or an airtight chamber, a vacuum device and/or an air extraction device is disposed under a reverse side of an intermediate layer or on a reverse side of an intermediate layer.

12. Device in accordance with one or several of claims 9 to 11, wherein one or several further layers (22, 23,) with an added material increasing durability and/or metal particles and at least one temperature-resistant bonding agent, average particle-size of which is larger than that of a first layer, though less than 800 »m, preferably less than 500 »m, are disposed under a first free-venting, upper layer (21) of a negative deep drawing mould (2), and/or fibres and/or needles or needle-type forms or structures, preferably containing aluminium needles, carbon fibres and/or glass fibres, and/or their pore-volume, in relation to a pore volume of a surface layer, are enlarged.

13. Device in accordance with one or several of claims 9 to 12, wherein an added material which increases durability is fully or partly made of an added material which has a hardness-rating of over 4 (measured in accordance with a Mohsscher scale), preferably of over 5, or this hard added material contains fibres or metal particles mixed with other added materials.

14. Device in accordance with one or several of claims 9 to 13, wherein an added material is made of a metallic carbide, preferably a heavy-metal carbide and/or metal oxide, or contains these as a mixture.

15. Device in accordance with one or several of claims 9 to 14, wherein a fine-particle or very-fine-particle metal powder is made of at least one light metal, preferably aluminium, and/or at least one heavy metal, preferably rustproof steel, or contains one or several of these metals or metal alloys.

16. Device in accordance with one or several of claims 9 to 15, wherein particles or pieces of metal and/or an added material which increases durability are coated or covered in at least one layer with a synthetic material or a bonding agent, preferably with epoxy resin.

17. Device in accordance with one or several of claims 9 to 16, wherein a first layer containing metal, metal particles and, where applicable, an added material which increases durability, bordering on a surface of a plastic mould, has a thickness of
1 to 15 mm, preferably
2 to 5 mm
and contains, (in relation to 100% weight of metal particles and added materials increasing durability)
more than 60% weight, preferably
more than 80% weight
(in relation to a content of metal particles, added materials, fibres and such like, without bonding agent or resinous bonding agent - calculated as being 100 % weight) metal particles with an average metal particle thickness of less than 60 »m, which are additionally coated and, where applicable, contain a low proportion of inorganic, organic or carbon fibres and, as a remaining constituent, added materials increasing durability.

18. Device in accordance with one or several of claims 9 to 17, wherein a second layer (22) disposed below a first layer (21) has an average metal particle thickness (excluding needles or fibres) of less than 90 »m, preferably of less than 70 »m and is made of
more than 30 % weight, preferably
more than 40 %
metal particles, preferably from a metal powder and/or from needle-type aluminium and/or added materials, which are coated with a resin or bonding agent, preferably epoxy resin.

19. Device in accordance with one or several of claims 9 to 18, wherein a first (21) and/or second layer (22) contains
0.001 to 8 % weight, preferably
0.1 to 6% weight
inorganic and/or organic fibres and/or needle-type particles.

20. Device in accordance with one or several of claims 9 to 19, wherein, after a first (21) and/or a second upper layer (22), at least a third, fourth or further layer (23) is disposed, which has a larger average particle-size than a first or second layer, and an average particle diameter therefore increases in layers disposed below an upper layer, preferably increasing continuously, and/or a free-pore volume in layers disposed after an upper layer (of a surface of a negative deep drawing mould) increases, preferably increasing continuously.

21. Device in accordance with one or several of claims 9 to 20, wherein a third and/or fourth layer contains
less than 30 % weight, preferably
less than 25 % weight
of inorganic fibres, preferably glass fibres, and/or carbon fibres (in relation to a content of metal particles, added materials and fibres, calculated, without bonding agent, as being 100 % weight).

22. Device in accordance with one or several of claims 9 to 21, wherein a metal-powder-free or low-metal-powder surface or synthetic layer and/or separating layer is disposed before a first metal-powder-containing layer.

23. Device in accordance with one or several of claims 9 to 22, wherein a last or n^{th} layer, which lies against a plane of separation of a mould, is a non-porous, sealing layer (24).

24. Device in accordance with one or several of claims 9 to 23, wherein a negative deep drawing mould (2) and a press (5) are disposed so that they can move in an axial direction, and they are connected to a movement device and/or a device for producing a negative and/or an excess pressure, and a negative deep drawing mould and/or a press contains a tempering system or a tempering device or is connected to this, and a press, as a positive form, has more than 50 % of a form surface, preferably more than 65 % of a form surface, a form, form areas or outlines of a negative deep drawing mould.

25. Device in accordance with one or several of claims 9 to 24, wherein a negative deep drawing mould is associated with a collecting basin or a collecting vessel and jets, sprays or spraying devices, openings of which and/or jet angles are directed onto a space of a form of a negative deep drawing mould for uptake of a web of plastic.

## Revendications

1. Procédé pour la fabrication d'objets à partir de bandes en matière synthétique thermodéformables, dans lequel on chauffe les bandes en matière synthétique, on les tend à l'aide de cadres de tension ou d'étanchéification et, avec utilisation conjointe d'une différence de pression, on les introduit par leur face endroit dans un moule qui possède une couche superficielle de moulage perméable à l'air et dans lequel on réalise le façonnement définitif et le grenage par thermoformage, caractérisé en ce que, avec utilisation conjointe d'une différence de pression et/ou à l'aide d'un poinçon (5), la bande en matière synthétique (13) est cambrée en direction du moule d'emboutissage négatif (2) et prémoulée, en ce que, entre la bande de matière synthétique et le moule d'emboutissage négatif plus froid, on maintient une différence de température supérieure à 50 °C, en ce que, avant le thermoformage, sur la face envers de la bande en matière synthétique, on règle la température d'une couche superficielle pour qu'elle soit inférieure de plus de 5 °C à la température sur la surface de la bande en matière synthétique tournée vers le moule d'emboutissage négatif (2), tandis que, sur le côté de la bande en matière synthétique tourné vers le moule d'emboutissage négatif (2), on chauffe la couche superficielle à une température supérieure (par rapport à celle de l'autre couche superficielle) qui se situe dans le domaine thermoplastique et qui va jusqu'à 260 °C, et on effectue le grenage avec le moule d'emboutissage négatif (2) présentant une couche superficielle de moulage (21) poreuse et perméable à l'air.

2. Procédé selon la revendication 1, caractérisé en ce que, avant le thermoformage sur la face envers de la bande en matière synthétique, on règle la température d'une couche superficielle par chauffage commandé ou par refroidissement commandé, qui est inférieure de plus de 10 °C à la température sur la bande de feuille en matière synthétique tournée vers le moule d'emboutissage négatif (2) et en ce que, avant d'appliquer une pression négative sur le moule d'emboutissage négatif, on procède à une fermeture procurant une étanchéité et ensuite, on applique une pression négative.

3. Procédé selon les revendications 1 et 2, caractérisé en ce que, peu de temps avant le thermoformage, le poinçon (5), de préférence un poinçon positif, se rapproche de la bande en matière synthétique chauffée, tendue, en ce que la bande en matière synthétique est posée ou aspirée par-dessus la surface de poinçon et, en l'occurrence, prend la forme de la surface du poinçon complètement ou dans des zones partielles, en ce que, par la suite, on procède à une fermeture de l'ouverture du moule d'emboutissage négatif (2), procurant une étanchéité, et, pendant la fermeture procurant une étanchéité ou peu de temps après, on supprime le vide appliqué du côté du poinçon et on exerce, sur la face envers de la bande en matière synthétique par-dessus le poinçon ou par-dessus la surface du poinçon, une pression de
4 x 10² Pa à 4 x 10⁵ Pa, de préférence
1 x 10³ Pa à 1,5 x 10⁵ Pa,
et/ou on exerce une pression négative du côté du moule d'emboutissage négatif (2) par aspiration de la bande en matière synthétique contre le moule d'emboutissage négatif.

4. Procédé selon une ou plusieurs des revendications 1 à 3, caractérisé en ce qu'on utilise le moule d'emboutissage négatif en combinaison avec une chambre de pression.

5. Procédé selon une ou plusieurs des revendications 1 à 4, caractérisé en ce qu'on maintient la bande en matière synthétique tendue chauffée, au moyen d'un gaz de support ou d'un vide appliqué dans le sens contraire ou encore d'un poinçon (5) et on la façonne dans la direction du moule d'emboutissage négatif, en ce que, par la suite, on déplace le moule d'emboutissage négatif dans la direction du façonnement ou du poinçon et, simultanément ou ultérieurement, on applique une pression négative et on transfère, sur le moule d'emboutissage négatif (2), la bande en matière synthétique façonnée, où elle prend sa forme définitive, en ce que, par la suite, on ouvre le moule d'emboutissage négatif (2) fermé par le poinçon en retirant le moule d'emboutissage négatif ou le poinçon.

6. Procédé selon une ou plusieurs des revendications 1 à 5, caractérisé en ce qu'on règle la température du moule d'emboutissage négatif (2) au cours du façonnement définitif à une température
inférieure à 100 °C, de préférence
inférieure à 85 °C,
et on utilise un moule d'emboutissage négatif qui possède une couche superficielle de moulage (21) poreuse perméable à l'air, de préférence microporeuse perméable à l'air, qui présente une couche contenant des additifs augmentant la résistance et contenant des particules métalliques, des particules d'alliages métalliques, des particules micrométalliques, des particules céramiques-métalliques et/ou des particules céramiques-micrométalliques, ou encore une surface présentant une épaisseur de particules moyenne inférieure à 150 »m, de préférence inférieure à 60 »m.

7. Procédé selon une ou plusieurs des revendications 1 à 6, caractérisé en ce que le poinçon (5) est soumis à un équilibrage thermique.

8. Procédé selon une ou plusieurs des revendications 1 à 7, caractérisé en ce que la distance séparant la surface de moulage du poinçon de la surface de moulage du moule d'emboutissage négatif s'élève
de 2 à 50 mm, de préférence
de 3 à 15 mm,
dans la position de fermeture (lors du façonnement définitif) et/ou en ce que, dans la position de fermeture (lors du façonnement définitif), la distance entre la surface de moulage du poinçon et l'envers de la feuille présente est
supérieure à 500 »m, de préférence
supérieure à 1,5 »m.

9. Dispositif pour la fabrication d'objets à partir de bandes en matière synthétique thermoformables conformément au procédé d'emboutissage négatif, contenant un moule d'emboutissage négatif (2) qui est équipé d'au moins un dispositif (17) pour appliquer une pression négative, ainsi que d'un dispositif d'équilibrage thermique (3, 11) et qui possède une couche superficielle de moulage poreuse, perméable à l'air contenant des particules métalliques, dans lequel un dispositif de tension pour la bande en matière synthétique est attribué au moule d'emboutissage négatif (2), caractérisé en ce que la couche superficielle (21) du moule d'emboutissage négatif, contenant des particules métalliques, des particules d'alliages métalliques, des particules micrométalliques, des particules céramiques-métalliques et/ou des particules céramiques-micrométalliques, présente des additifs augmentant la résistance avec une épaisseur de particules moyenne inférieure à 150 »m, en ce que la couche contient au moins un métal et au moins un additif (sous forme finement divisée) augmentant la résistance, avec des granulométries et/ou des contours différents, ainsi qu'au moins un liant, en ce que le moule d'emboutissage négatif présente au moins deux couches différentes (21, 22, 23) et les particules métalliques et/ou les additifs augmentant la résistance, qui y sont contenus, possèdent, par rapport à l'autre couche, des granulométries et/ou des compositions différentes.

10. Dispositif pour la fabrication d'objets à partir de bandes en matière synthétique thermoformables conformément au procédé d'emboutissage négatif, contenant un moule d'emboutissage négatif (2) qui est équipé d'au moins un conduit ou d'un dispositif pour appliquer une pression négative (17), et d'un dispositif d'équilibrage thermique (3, 11) et qui possède une couche superficielle de moulage poreuse, perméable à l'air, dans lequel, au moule d'emboutissage négatif (2), est attribué un dispositif de tension pour la bande en matière synthétique, caractérisé en ce que la couche superficielle de moulage du moule d'emboutissage négatif est constitué d'une matière synthétique résistant à la température, de préférence d'une résine époxyde et/ou d'un caoutchouc de silicone ou d'une gomme de silicone, ou bien contient ces derniers.

11. Dispositif selon les revendications 9 et 10, caractérisé en ce que le poinçon présente, sur une couche superficielle, des trous, des pores ou des évidements, dans lequel la couche superficielle est constituée d'une matière synthétique résistant à la température et/ou d'un métal, en ce que, en dessous de la couche superficielle, est disposée au moins une autre couche intermédiaire poreuse ou perméable à l'air et/ou dans ou contre la couche superficielle, est disposé un dispositif d'équilibrage thermique, et en dessous de l'envers de la couche intermédiaire ou contre l'envers de la couche intermédiaire, est disposée au moins une couche imperméable à l'air ou encore une chambre présentant une étanchéité à l'air, un dispositif de vide et/ou un dispositif d'évacuation.

12. Dispositif selon une ou plusieurs des revendications 9 à 11, caractérisé en ce que, en dessous de la première couche supérieure (21) perméable à l'air du moule d'emboutissage négatif (2), sont disposées une ou plusieurs couches supplémentaires (22, 23) contenant un additif augmentant la résistance et/ou des particules métalliques et au moins un liant résistant à la température, dont la granulométrie moyenne est supérieure à celle de la première couche, mais inférieure à 800 »m, de préférence inférieure à 500 »m, et/ou qui contiennent des fibres et/ou des aiguilles ou des formes ou des structures aciculaires, de préférence des aiguilles en aluminium, des fibres de carbone et/ou des fibres de verre, et/ou dont le volume de pores par rapport au volume de pores de la couche superficielle est augmenté.

13. Dispositif selon une ou plusieurs des revendications 9 à 12, caractérisé en ce que l'additif augmentant la résistance est constitué, en tout ou en partie, d'un additif qui présente une dureté supérieure à 4 (mesurée d'après l'échelle de dureté de Mohsschen), de préférence supérieure à 5, ou bien contient cet additif dur en mélange avec d'autres additifs, d'autres fibres ou d'autres particules métalliques.

14. Dispositif selon une ou plusieurs des revendications 9 à 13, caractérisé en ce que l'additif est constitué d'un carbure métallique, de préférence d'un carbure de métal lourd et/ou d'un oxyde métallique, ou bien contient ces derniers en mélange.

15. Dispositif selon une ou plusieurs des revendications 9 à 14, caractérisé en ce que la poudre métallique finement divisée ou très finement divisée est constituée par au moins un métal léger, de préférence par de l'aluminium et/ou par au moins un métal lourd, de préférence de l'acier inoxydable, ou bien contient un ou plusieurs de ces métaux ou de ces constituants d'alliages métalliques.

16. Dispositif selon une ou plusieurs des revendications 9 à 15, caractérisé en ce que les particules métalliques ou les éléments métalliques et/ou les additifs augmentant la résistance, dans au moins une couche, sont enduits ou recouverts d'une résine synthétique ou d'un liant, de préférence d'une résine époxyde.

17. Dispositif selon une ou plusieurs des revendications 9 à 16, caractérisé en ce que la première couche adjacente à la surface de moulage en matière synthétique, contenant du métal, du micrométal et éventuellement des additifs augmentant la résistance, présente une épaisseur de couche
de 1 à 15 mm, de préférence
de 2 à 5 mm,
et contient (rapportés à 100 parties en poids de particules métalliques et d'additifs augmentant la résistance) à concurrence
de plus de 60% en poids, de préférence
de plus de 80% en poids,
(rapportés à la teneur en particules métalliques, en additifs, en fibres et analogues, toutefois sans le liant ou sans le liant de résine synthétique - calculé à 100 % en poids) des particules métalliques finement divisées présentant une épaisseur moyenne de particules métalliques inférieure à 60 »m, qui sont recouvertes en outre d'un liant ou d'une résine et qui contiennent éventuellement une fraction minime en fibres inorganiques, organiques ou de carbone et, comme composant résiduel, des additifs augmentant la résistance.

18. Dispositif selon une ou plusieurs des revendications 9 à 17, caractérisé en ce que la deuxième couche (22) disposée en dessous de la première couche (21) présente une épaisseur moyenne de particules métalliques (à l'exception d'aiguilles ou de fibres) inférieure à 90 »m, de préférence inférieure à 70 »m, et est constituée à concurrence
de plus de 30% en poids, de préférence
de plus de 40% en poids
par des particules métalliques, de préférence par une poudre d'aluminium et/ou par de l'aluminium aciculaire et/ou par des additifs, qui est (sont) recouvert(s) avec une résine synthétique ou avec un liant, de préférence une résine époxyde.

19. Dispositif selon une ou plusieurs des revendications 9 à 18, caractérisé en ce que cette première couche (21) et/ou cette deuxième couche (22) contiennent
de 0,001 à 8 % en poids, de préférence
de 0,1 à 6 % en poids
de fibres inorganiques et/ou organiques et/ou de particules aciculaires.

20. Dispositif selon une ou plusieurs des revendications 9 à 19, caractérisé en ce que, après la première couche supérieure (21) et/ou la deuxième couche supérieure (22), est disposée au moins une troisième couche, une quatrième couche ou une couche supplémentaire (23) qui présente une granulométrie moyenne supérieure à celle de la première, respectivement de la deuxième couche, et dont le diamètre de particules moyen augmente ainsi dans les couches disposées en dessous de la couche supérieure, de préférence augmente en continu, et/ou le volume de pores libres dans les couches disposées après la couche supérieure (la surface de moulage du moule d'emboutissage négatif) augmente, de préférence augmente en continu.

21. Dispositif selon une ou plusieurs des revendications 9 à 20, caractérisé en ce que la ou les troisième et/ou quatrième couches contient ou contiennent
moins de 30% en poids, de préférence
moins de 25% en poids,
de fibres inorganiques, de préférence de fibres de verre, et/ou de fibres de carbone (rapportés à la teneur en particules métalliques, en additifs et en fibres calculée à concurrence de 100% en poids - sans liant).

22. Dispositif selon une ou plusieurs des revendications 9 à 21, caractérisé en ce que, avant la première couche contenant de la poudre métallique, est disposée une couche superficielle exempte de poudre métallique ou pauvre en poudre métallique, ou encore une couche en matière synthétique et/ou une couche de séparation.

23. Dispositif selon une ou plusieurs des revendications 9 à 22, caractérisé en ce que la dernière couche ou la n-ième couche délimitant le plan de séparation du moule est une couche non poreuse (24) procurant une étanchéité.

24. Dispositif selon une ou plusieurs des revendications 9 à 23, caractérisé en ce que le moule d'emboutissage négatif (2) et le poinçon (5) sont disposés en mobilité axiale, se trouvent en liaison avec un dispositif de déplacement et/ou un dispositif pour générer une sous-pression et/ou une sur-pression, et le moule d'emboutissage négatif et/ou le poinçon contiennent un système d'équilibrage thermique ou un dispositif d'équilibrage thermique ou se trouvent en liaison avec ce dernier, en ce que le poinçon dans le moule positif présente, à concurrence de plus de 50% de la surface de moulage, de préférence à concurrence de plus de 65% de la surface de moulage, la forme, des domaines partiels de forme ou encore les contours du moule d'emboutissage négatif.

25. Dispositif selon une ou plusieurs des revendications 9 à 24, caractérisé en ce que, au moule d'emboutissage négatif, sont attribués une cuve de récupération ou encore un récipient de récupération, ainsi que des tuyères, des injecteurs ou des dispositifs d'injection dont les ouvertures et/ou les angles de tuyères sont dirigés vers l'espace de moulage du moule d'emboutissage négatif déterminé pour recevoir la bande en matière synthétique.
